# EUROPEAN PATENT SPECIFICATION

(11) **EP 4 308 458 B1**
(45) Date of publication and mention of the grant of the patent: **12.11.2025**
(21) Application number: 22728422.1
(22) Date of filing: 09.05.2022
(51) Int. Cl.: B64D 37/14, B64D 37/28, B64D 37/32, B64F 1/28, F02C 7/232, F16K 37/00

(54) **A METHOD OF DETERMINING AN OPERATING CONDITION OF A VALVE OF AN AIRCRAFT SYSTEM**
VERFAHREN ZUR BESTIMMUNG EINES BETRIEBSZUSTANDS EINES VENTILS EINES FLUGZEUGSYSTEMS
PROCÉDÉ DE DÉTERMINATION D'UNE CONDITION DE FONCTIONNEMENT D'UNE VANNE D'UN SYSTÈME D'AÉRONEF

(30) Priority: 27.05.2021 GR 20210100354
(43) Date of publication of application: 24.01.2024
(73) Proprietor: Airbus Operations Limited, Bristol BS34 7PA (GB); Airbus Operations (S.A.S.), 31060 Toulouse Cedex 9 (FR)
(72) Inventor: MANARAS, Petros, 31060 Toulouse Cedex 09 (FR); SAGAR, Brian, Bristol, BS34 7PA (GB)
(74) Representative: Pilcher, Adam
(86) International application number: PCT/EP2022/062441
(87) International publication number: WO 2022/248202

(56) References cited:
- EP-A1- 2 998 652
- EP-A1- 3 379 359
- WO-A1-2012/013957
- US-A1- 2016 291 075
- US-A1- 2019 226 601

## Description

### TECHNICAL FIELD

The present invention relates to a method of determining an operating condition of a valve of an aircraft system, and an aircraft fuel system.

### BACKGROUND

Aircraft systems may comprise valves to control the flow of fluid between different components of the aircraft system. For example, aircraft fuel systems may comprise multiple fuel storage tanks, and fuel may be moved between the fuel storage tanks in-flight to maintain or obtain desired flight properties such as to trim the aircraft to obtain a desired attitude of the aircraft. Such fuel storage tanks typically have valves that control flow of fluid into and out of the fuel storage tank.

US patent application US 2016/291075 A1 describes a method for ensuring that desired movement of a solenoid valve is carried out, by way of monitoring the rate of change of current drawn by that solenoid valve across two different time periods during a single actuation of the valve.

US patent application US 2019/226601 A1 describes a control system for a vehicle exhaust valve, that is able to position the valve by measuring the time taken to move the valve from a closed to an open position at vehicle start-up, then subdividing that time to determine how long to move the valve to obtain a desired valve position.

EP patent application EP 2 998 652 A1 describes a gas valve assembly having a valve actuator and sensors which is controlled by a controller that is configured to determine the condition of the valve based on sensed parameters.

EP patent application EP 3 379 359 A1 describes an unsupervised algorithm to detect abnormal operation in shut-off valves in aircraft; by monitoring parameters such as temperature and pressure and determining the difference between a maximum value of such a parameter in a time window after consecutive closures of a shut-off valve.

PCT patent application WO 2012/013957 A1 describes an aircraft refuel control system that is able to control a refuel valve based on monitored data relevant to the refuel process, enabling refuelling the aircraft to be automated.

### SUMMARY

A first aspect of the present invention provides a method of determining an operating condition of a valve of an aircraft system according to claim 1. A second aspect of the present invention provides an aircraft fuel system according to claim 12. Preferred aspects of the invention are mentioned in the dependent claims.

### BRIEF DESCRIPTION OF THE DRAWINGS

Embodiments of the invention will now be described, by way of example only, with reference to the accompanying drawings, in which:
Figure 1 shows a schematic view of a first aircraft fuel system;
Figure 2 shows actuation of a valve of the first aircraft fuel system of Figure 1;
Figure 3 shows a method of determining an altered operating condition of a valve of the first aircraft fuel system of Figure 1;
Figure 4 shows a first graph illustrating time periods associated with actuation of a valve of the first aircraft fuel system of Figure 1;
Figure 5 shows a second graph illustrating time periods associated with actuation of a valve of the first aircraft fuel system of Figure 1;
Figure 6 shows a schematic view of a second aircraft fuel system;
Figure 7 shows a schematic view of an aircraft comprising the first aircraft fuel system of Figure 1 or the second aircraft fuel system of Figure 6; and
Figure 8 shows a schematic view of a data carrier.

### DETAILED DESCRIPTION

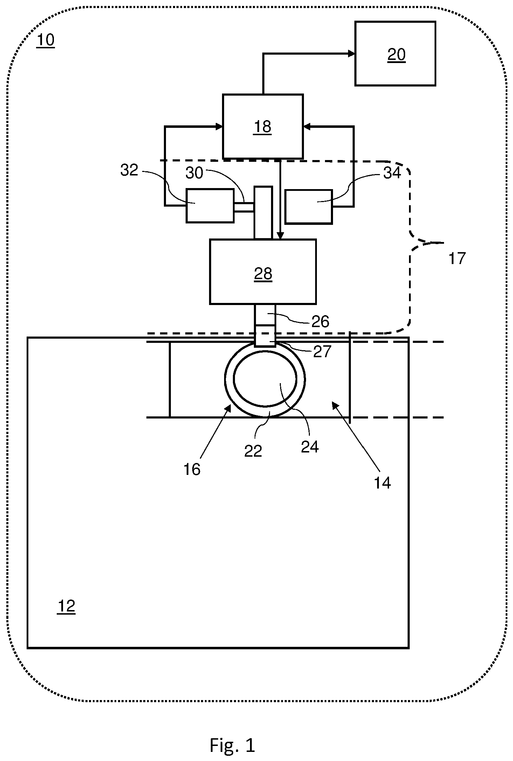

An aircraft system, in the form of an aircraft fuel system, generally designated 10, is illustrated schematically in Figure 1.

The aircraft fuel system 10 comprises a fuel storage tank 12, a conduit 14, a valve 16, a valve actuator 17, a controller 18, and an indicator 20.

The fuel storage tank 12 is any appropriate fuel storage tank for use in an aircraft, and comprises a container within which fuel is housed in use. It will be appreciated that there may be many such fuel storage tanks 12 located on any one aircraft. Similarly the conduit 14 is any appropriate conduit for use in an aircraft, and the conduit 14 defines both an inlet and an outlet of the fuel storage tank 12. In other examples the conduit 14 may define only one of an inlet or outlet of the fuel storage tank 12, with the other of the outlet and inlet of the fuel storage tank 12 provided by a further conduit of the fuel storage tank 12.

The valve 16 is located within the conduit 14, and comprises a ball valve. The valve 16 comprises a valve drive spindle 27 connected to a generally ball shaped main body 22, with a bore 24 formed therein. The main body 22 sits within a valve seat of the conduit 14, such that the main body 22, and hence the bore 24, is rotatable relative to the conduit 14 via the valve drive spindle 27. The main body 22 is rotatable within the conduit 14 through an angle of around 90 degrees, such that either the main body 22 is located in a first position in which the main body 22 interrupts fluid flow through the conduit 14, or the main body 22 is located in a second position where the bore 24 is located such that fluid can pass through the bore 24, either into or out of the fuel storage tank 12 through the conduit 14. The first position may be referred to as a closed position of the valve 16, whereas the second position may be referred to as an open position of the valve 16.

The valve actuator 17 comprises a shaft 26 and a motor 28. The shaft 26 is connected to the main body 22 of the valve 16 via the valve drive spindle 27, and the motor 28 is operable, in response to a command issued by the controller 18, to cause rotation of the shaft 26, and consequently the valve drive spindle 27, to move the main body 22 between the first and second positions, ie the closed and open positions, discussed above. The motor 28 may be thought of as a driver of the valve 16. The shaft 26 is provided with a projection 30, and first 32 and second 34 microswitches are located adjacent to the shaft 26 The projection 30 contacts the first microswitch 32 when the main body 22 of the valve 16 is in the first, closed, position, such that the first microswitch 32 is closed when the main body 22 of the valve 16 is in the closed position, and the projection 30 contacts the second microswitch 34 when the main body 22 of the valve 16 is in the second, open, position, such that the second microswitch 34 is closed when the main body 22 of the valve 16 is in the open position.

The first 32 and second 34 microswitches are connected to the controller 18, such that the controller 18 knows when the main body 22 of the valve 16 is in either of the first, closed, and second, open, positions, or in transition between the first, closed, and second, open, positions.

The controller 18 comprises a processor, and the controller 18 is configured to provide commands to the motor 28 to drive actuation of the main body 22 of the valve 16 between its first, closed, and second, open, positions. The controller 18 may, in some examples, derive the commands based on inputs received from other systems of the aircraft in which the aircraft fuel system 10 is installed. The controller 18 comprises a clock, or counter, which may be used to monitor actuation of the valve 16 as will be described in more detail hereinafter. The controller 18 may communicate details of actuation of the valve 16 to the indicator.

The indicator 20 may take many forms, as will be described hereinafter, and is capable of providing an indication of an operating condition, or an altered operating condition, of the valve 16. In the example of Figure 1 the indicator 20 is depicted as being part of the aircraft fuel system 10, although it will be appreciated that other examples, where the indicator forms part of the wider aircraft or is located remote from the aircraft, for example at an on-ground location, are also envisaged. The indicator 20 in Figure 1 is depicted as coupled to the controller 18, although it will be appreciated that in some examples the controller 18 may itself provide an indication of an operating condition, or an altered operating condition, of the valve 16 by way of data generated by or output by the controller 18.

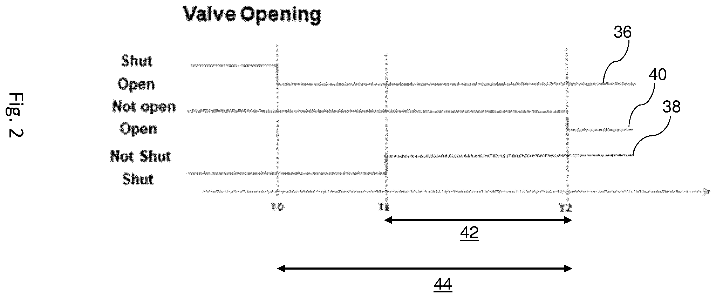

Actuation of the valve 16 between a closed position and an open position is illustrated schematically in Figure 2.

The controller 18 provides a command signal 36 to actuate the motor 28 to turn the shaft 26 to open or close the valve 16 via the valve drive spindle 27, with the command signal 36 variable between a logic high state indicative of a valve shut command, and a logic low state indicative of a valve open command.

The first microswitch 32 provides a "shut" feedback signal 38 to the controller 18, with the shut feedback signal 38 variable between a logic low state indicative of the first, closed, position of the valve 16, and a logic high state indicative of a non-closed position of the valve 16. The logic low state of the shut feedback signal 38 is provided when the projection 30 contacts the first microswitch 32, whereas the logic high state of the shut feedback signal 38 is provided when the projection 30 does not contact the first microswitch 32.

The second microswitch 34 provides an "open" feedback signal 40 to the controller 18, with the open feedback signal 40 variable between a logic low state indicative of the second, open, position of the valve 16, and a logic high state indicative of a non-open position of the valve 16. The logic low state of the open feedback signal 40 is provided when the projection 30 contacts the second microswitch 34, whereas the logic high state of the open feedback signal 40 is provided when the projection 30 does not contact the first microswitch 32.

It will be appreciated that the functions of the logic high and logic low states discussed above may be reversed, if so desired.

It can be seen that in the example of Figure 2, the valve 16 transitions from the first, closed, position, to the second, open, position.

At a time T0, the command signal 36 provided by the controller 18 transitions from its logic high state to its logic low state, indicating a desire to open the valve 16 to allow fuel to flow into or out of the fuel storage tank 12. Given delays in processing, the signal reaching the motor 28, and the motor 28 being energised, at a later time T1 the shaft 26 is turned such that the projection 30 no longer contacts the first microswitch 32. Hence at time T1 the closed feedback signal 38 transitions from its logic low state to its logic high state, indicating that the valve 16 is not closed. At time T1, the open feedback signal 40 remains in its logic high state, indicating that the valve 16 is not open.

At a later time T2, the shaft 26 has turned to move the main body 22 of the valve 16 from its first, closed, position to its second, open position, and the projection 30 contacts the second microswitch 34. Thus at T2 the open feedback signal 40 transitions from its logic high state to its logic low state, indicating that the valve 16 is open.

The controller 18 monitors the times T0, T1 and T2, and these times can be utilised to determine altered operating conditions of the valve 16. An altered operating condition associated with actuation of the valve 16 may comprise an operating condition where the valve is functioning in an unintended manner, for example due to wear, friction or altered operating conditions of the motor. An altered operating condition associated with actuation of the valve may comprise an operating condition where the time taken for the valve to open or close is longer than a pre-determined nominal acceptable time. It will be appreciated that T1 and T2 may also be refer to the transition of the open feedback signal 40 from its logic low state to its logic high state, and the transition of the closed feedback signal 38 from its logic high state to its logic low state, respectively, in the event of the valve 16 closing rather than opening.

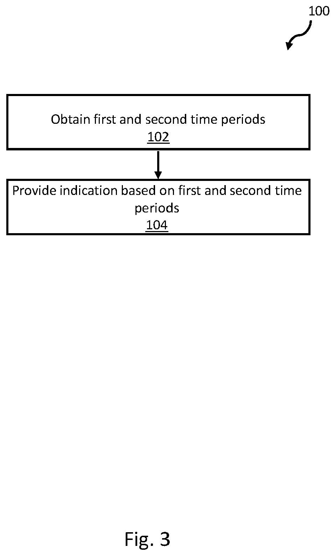

A method 100 of determining an operating condition of the valve 16 is illustrated schematically in Figure 3, and comprises obtaining 102 a first time period associated with actuating the valve 16, and a second time period associated with actuating the valve 16, and providing 104 an indication of an altered operating condition associated with actuation of the valve 16 based on the first and second time periods.

It will be appreciated that the first and second time periods may be utilised in different manners, as will be described hereinafter.

For example, a first time period 42, from T1 to T2, may be measured and utilised, and the first time period 42 may be referred to as a feedback to feedback period given that it is dependent on feedback from both the first 32 and second 34 microswitches. The first time period 42, in general, comprises a time period indicative of how long it takes the main body 22 of the valve 16 to rotate between its first, closed, position and its second, open, position, or vice versa.

A second time period 44, from T0 to T2, may additionally or alternatively be measured and utilised, and the second time period 44 may be referred to as a command to feedback period given that it is dependent on the command to open or close the valve 16 provided by the controller 18, and feedback from either the second microswitch 34 or the first microswitch 32 dependant on whether the valve 16 is opening or closing.

In one example, the first time period 42 may be utilised to determine an altered operating condition associated with actuation of the valve 16. During a single flight of an aircraft 300 in which the aircraft fuel system 10 is installed, the controller 18 monitors the first time period 42 each time the valve 16 is actuated, ie either opened or closed. The controller 18 either stores in memory of the aircraft 300, or transmits to and stores in a remote memory location, the first time period 42 having a largest value for that flight. In some examples, each first time period 42 that occurs may be recorded, although it will be appreciated that this may require greater memory capacity.

This process is repeated over a number of flights of the aircraft 300, with each first time period 42 having a largest value for a given flight either stored in memory of the aircraft 300, or transmitted to and stored in a remote memory location. Each stored value of the first time period 42 is compared to a threshold value indicative of a normal operating condition of the valve 16. The threshold value may be chosen to be lower than a value which would cause an in-flight abnormal operating condition warning to be provided. Where a pre-determined number of first time periods 42 exceed the threshold value within a pre-determined time window, an indication of an altered operating condition associated with actuation of the valve 16 is provided.

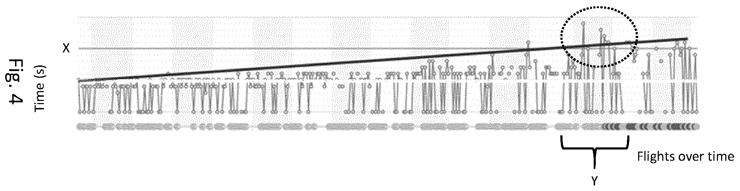

Examples of stored first time periods 42 are illustrated in the graph of Figure 4, with each point corresponding to a first time period 42. Here, the threshold value for the first time period 42 is illustrated as X. In some examples, X is in the region of six to fourteen seconds, for example around ten seconds. Where stored first time periods 42 for a pre-determined number of flights, say a number of flights between two and fifty flights within a time window, labelled Y in Figure 4, exceed the threshold value X, an indication of an altered operating condition associated with actuation of the valve 16 is provided. Such a situation is illustrated in the circled region of the graph of Figure 4. The time window Y may be in the region of ten days to fifty days, for example around thirty days. In some examples, the pre-determined number of flights may be around five flights within the last fifty flights.

As will be appreciated, the indication may take many forms. For example, where the controller 18 stores the first time periods 42 in local memory of the aircraft 300, when a first time period 42 is determined that causes the above-mentioned criteria to be met, the indicator 20 may provide a visual indication to flight crew of the aircraft, in the form of an illuminated light or an on-screen message, that an altered operating condition associated with actuation of the valve 16 has been determined. In such a circumstance, the flight crew of the aircraft 300 may record the indication in a log and/or flag the indication to on-ground maintenance personnel such that the valve 16 and/or the valve actuator 17 can be examined and replaced as required.

In some examples, the comparison steps may be performed by the controller 18, with the indication of an altered operating condition associated with actuation of the valve 16 being transmitted from the controller 18 to a method indicator 20 for display by the indicator 20. For example, comparative and/or computational steps may be performed by the controller 18, with the remote indicator 20 being used to display the indication to on-ground maintenance personnel. The indication in such examples may comprise an illuminated light or an on-screen message, or a visual representation such as the graph of Figure 4.

In some examples, where the controller 18 transmits the first time periods 42 for storage in remote memory, and the indicator 20 is located remotely from the aircraft 300, comparative and/or computational steps may be performed remotely from the aircraft 300 based on data transmitted by the controller 18, with the indicator 20 communicating the indication of an altered operating condition associated with actuation of the valve 16 to on-ground maintenance personnel. The indication in such examples may comprise an illuminated light or an on-screen message, or a visual representation such as the graph of Figure 4.

Whilst visual forms of indication have been described above, it will be appreciated that other forms of indication, for example aural indications, are also envisaged. Furthermore, it will be appreciated that the raw data values of the first time periods 42 itself, for example raw data values indicating the length, the start, or the end, of the first time period 42, may be considered an indication of an altered operating condition associated with actuation of the valve 16, given that an altered operating condition may be derived from the raw data values.

In other examples, both the first 42 and second 44 time periods may be utilised to determine an altered operating condition associated with actuation of the valve 16.

During a single flight of an aircraft 300 in which the aircraft fuel system 10 is installed, the controller 18 monitors the first time period 42 and the second time period 44 each time the valve 16 is actuated, ie either opened or closed. The controller 18 either stores in memory of the aircraft 300, or transmits to and stores in a remote memory location, the first time period 42 having a largest value for that flight and the second time period 44 having a largest value for that flight, and/or the second time period 44 having a largest value for that flight and its corresponding first time period 42. In some examples, each first time period 42 and each second time period 44 that occurs may be recorded, although it will be appreciated that this may require greater memory capacity.

It has been found that a comparison between the first 42 and second 44 time periods may be utilised to distinguish between different altered operational modes of the valve 16.

For example, where both the first time period 42 and the second time period 44 are above corresponding threshold values, the valve 16 may comprise an operating condition where the time taken for the valve 16 to open and/or close is longer than a nominal time taken during a normal operating condition. High values for both the first 42 and second 44 time periods may indicate is a greater amount of friction during the movement of the shaft 26 and/or the movement of the main body 22 of the valve 16 compared to a nominal normal operating condition.

Where the first time period 42 is below a corresponding threshold value, and the second time period 44 is above a corresponding threshold value, the valve 16 may comprise an operating condition where the time taken for the valve 16 to open and/or close is longer than a nominal time taken during a normal operating condition. A relatively high value for the second time period 44 and a relatively low value for the first time period 42 may be indicative of a greater amount of static friction in the shaft 26 and motor 28 or in the valve 16 compared to a nominal normal operating condition. This may be viewed as the time period T0 to T1, ie the time period from when a command is issued by the controller to the valve 16 moving away from a closed or open position, being longer than a nominal corresponding time period of a normal operating condition.

Where the first time period 42 is above a corresponding threshold value, and the second time period 44 is below a corresponding threshold value, this may be indicative of the closed feedback signal 38 or the open feedback signal 40 changing state without a change in state of the command signal 36. This may, for example, occur where the projection 30 of the shaft 36 moves out of contact with a corresponding microswitch 32,34 in the absence of a command signal, where one of the microswitches 32,34 experiences an abnormal operating condition, or where there is an unintentional change in electrical connection or wiring.

In some examples, the threshold value may be the same value for each of the first 42 and second 44 time periods.

Whilst in some examples first 42 and second 44 time periods from a single flight may be used to determine an abnormal operating condition associated with actuation of the valve 16, in other examples first 42 and second 44 time periods from multiple flights may be utilised, similar to the example discussed above where the first time period 42 is used without using the second time period 44.

In particular, appropriate first 42 and second 44 time periods for a given flight are either stored in memory of the aircraft 300, or transmitted to and stored in a remote memory location. Each stored value of the first 42 and second 44 time periods is compared to a threshold value indicative of a normal operating condition of the valve 16. The threshold value may be chosen to be lower than a value which would cause an in-flight abnormal operating condition warning to be provided. Where a pre-determined number of first 42 and second 44 time periods have the relationships described above relative to the threshold value (i.e. first time period 42 high and second time period 44 high, second time period 44 high and first time period 42 low, or first time period 42 high and second time period 44 low) within a pre-determined time window, an indication of an altered operating condition associated with actuation of the valve 16 is provided.

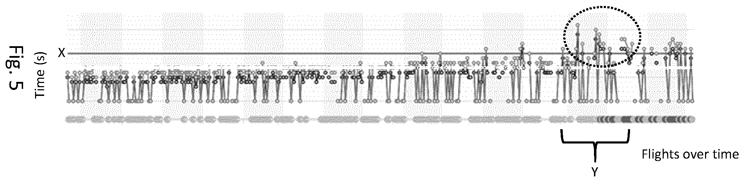

Examples of stored first 42 and second 44 time periods are illustrated in the graph of Figure 5, with first 42 and second 44 time periods occurring in pairs, with the higher value of a pair being the second time period 44 and the lower value of the pair being the first time period 42.

As in relation to the example of Figure 4 above, the indication in relation to the example of Figure 5 may take many forms. For example, where the controller 18 stores the first 42 and second 44 time periods in local memory of the aircraft 300, when a relationship is determined that causes the above-mentioned criteria to be met, the indicator 20 may provide a visual indication to flight crew of the aircraft 300, in the form of an illuminated light or an on-screen message, that an altered operating condition associated with actuation of the valve 16 has been determined. In such a circumstance, the flight crew of the aircraft 300 may record the indication in a log and/or flag the indication to on-ground maintenance personnel such that the valve 16 and/or the valve actuator 17 can be examined and replaced as required.

In some examples, the comparison steps may be performed by the controller 18, with the indication of an altered operating condition associated with actuation of the valve 16 being transmitted from the controller 18 to a method indicator 20 for display by the indicator 20. For example, comparative and/or computational steps may be performed by the controller 18, with the remote indicator 20 being used to display the indication to on-ground maintenance personnel. The indication in such examples may comprise an illuminated light or an on-screen message, or a visual representation such as the graph of Figure 5.

In some examples, where the controller 18 transmits the first 42 and second 44 time periods for storage in remote memory, and the indicator 20 is located remotely from the aircraft 300, comparative and/or computational steps may be performed remotely from the aircraft 300 based on data transmitted by the controller 18, with the indicator 20 communicating the indication of an altered operating condition associated with actuation of the valve 16 to on-ground maintenance personnel. The indication in such examples may comprise an illuminated light or an on-screen message, or a visual representation such as the graph of Figure 5.

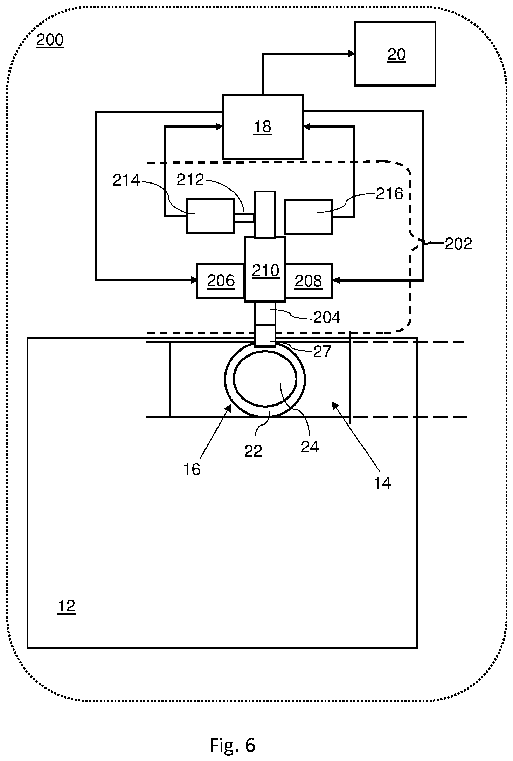

In the examples previously described, the aircraft fuel system 10 has a valve 16 actuated by one motor 28. In other examples, valves of aircraft fuel systems may be actuated by more than one motor. Such an example is illustrated schematically in Figure 6, where like reference numerals are utilised for sake of clarity. Here, an aircraft fuel system 200 has a fuel storage tank 12, a conduit 14, a valve 16, a controller 18, and an indicator 20, as previously described.

The aircraft fuel system 200 further has a valve actuator 202, which differs from the valve actuator 17 of the example of Figure 1 in that the valve actuator 202 comprises a shaft 204, a first motor 206, a second motor 208, and gearing 210. The shaft 204 is connected to the main body 22 of the valve 16 via the valve drive spindle 27, and the first 206 and second 208 motors are operable, in response to a command issued by the controller 18, to cause rotation of the shaft 204, via the gearing 210 to move the main body 22 via the valve drive spindle 27 between the first and second positions, ie the closed and open positions, discussed above in relation to the example of Figure 1. The first 206 and second 208 motors may be thought of as first and second drivers of the valve 16 respectively. The shaft 204 is provided with a projection 212, and first 214 and second 216 microswitches are located adjacent to the shaft 204. The projection 212 contacts the first microswitch 214 when the main body 22 of the valve 16 is in the first, closed, position, such that the first microswitch 214 is closed when the main body 22 of the valve 16 is in the closed position, and the projection 212 contacts the second microswitch 216 when the main body 22 of the valve 16 is in the second, open, position, such that the second microswitch 216 is closed when the main body 22 of the valve 16 is in the open position.

It will therefore be appreciated that the first time period 42 and the second time period 44 discussed in relation to the example of Figure 1 may also be obtained in relation to actuation of the valve 16 of the aircraft fuel system 200 of Figure 6.

It has been found that by monitoring the first time period 42 or the first time period 42 and the second time period 44 over a number of flights as previously described, an altered operating condition associated with actuation of the valve 16 may be determined, with the altered operating condition caused by an altered operating condition of at least one of the first 206 and second 208 motors. For example, where the first motor 206 experiences greater load torque than in a nominal operating condition, it may take longer for the valve 16 to be opened and/or closed, resulting in the first time period 42 and the second time period 44 being longer. It will be appreciated that examples where both the first 42 and second 44 time periods are used to identify and/or distinguish between altered operating conditions associated with actuation of the valve 16 of the aircraft fuel system 200 of Figure 6 are also envisaged, similar to the example discussed above in relation to the aircraft fuel system 10 of Figure 1.

In the examples described above, it will be appreciated that time periods associated with actuation of the valve 16 may be used to determine an altered operating condition associated with actuation of the valve 16.

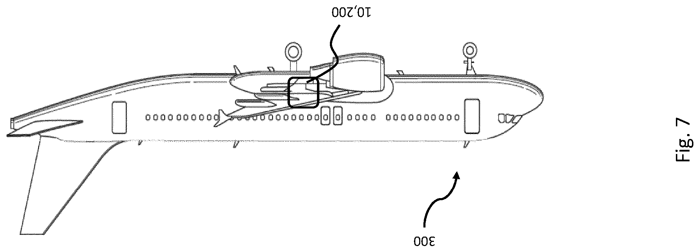

An aircraft 300 comprising the aircraft fuel system 12 of Figure 1, or the aircraft fuel system 200 of Figure 6 is illustrated schematically in Figure 7.

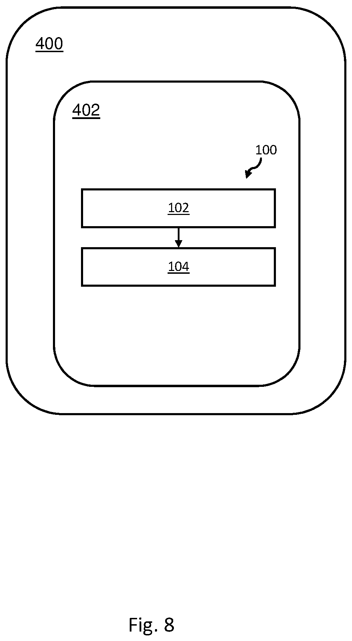

A data carrier 400 is illustrated schematically in Figure 8, and comprises machine readable instructions 402 which cause operation of a processor of the aircraft fuel system 10 of Figure 1 or the aircraft fuel system 200 of Figure 6 to obtain time periods associated with actuation of the valve 16, and provide an indication of an altered operating condition associated with actuation of the valve 16 based on the obtained time periods.

Whilst described herein in relation to an aircraft fuel system it will be appreciated that the teaching may be more generally applied to any aircraft system utilising a valve, including, for example, an aircraft environmental control system.

It is to be noted that the term "or" as used herein is to be interpreted to mean "and/or", unless expressly stated otherwise.

## Claims

1. A method of determining an operating condition of a valve (16) of an aircraft system (10), wherein the valve (16) is actuable between first and second positions, the method comprising:
obtaining (102) a first time period (42) indicative of how long it takes the valve to actuate from the first position to the second position or vice versa, during a first flight in which the aircraft system (10) is utilised, and a second time period (42) indicative of how long it takes the valve to actuate from the first position to the second position or vice versa, during a second flight in which the aircraft system (10) is utilised, the second flight different to the first flight; and
providing an indication (104) of an altered operating condition associated with actuation of the valve (16) based on the first and second time periods (42).

2. The method according to any preceding claim, wherein the method comprises comparing each of the first and second time periods (42) to a threshold value (X), and where each of the first and second time periods exceeds the threshold value (X), providing the indication (104) of the altered operating condition associated with actuation of the valve (16).

3. The method according to any preceding claim, wherein the method comprises providing the indication (104) of the altered operating condition associated with actuation of the valve (16) where the first and second flights occur within a pre-determined time window (Y).

4. The method according to any preceding claim, wherein the valve (16) is actuated a plurality of times in the first flight, the method comprises obtaining a first plurality of time periods (42) each corresponding to a respective actuation of the valve (16) during the first flight, and selecting the first time period (42) from the first plurality of time periods (42) based on a length of each of the first plurality of time periods (42), wherein the valve (16) is actuated a plurality of times in the second flight, the method comprises obtaining a second plurality of time periods (42) each corresponding to a respective actuation of the valve (16) during the second flight, and selecting the second time period (42) from the second plurality of time periods (42) based on a length of each of the second plurality of time periods (42).

5. The method according to claim 4, wherein the step of selecting the first time period (42) from the first plurality of time periods (42) comprises selecting the first time period (42) having a largest value for the first flight; and
the step of selecting the second time period (42) from the second plurality of time periods (42) comprises selecting the second time period (42) having a largest value for the second flight.

6. The method according to any preceding claim, wherein the method comprises obtaining at least four different time periods (42) indicative of how long it takes the valve (16) to actuate from the first position to the second position or vice versa, each time period (42) associated with actuating the valve (16) during a different respective flight of a plurality of flights, comparing each time period (42) to a corresponding threshold value, and, where each time period (42) exceeds the threshold value (X) and the plurality of flights occur within pre-determined time window (Y), providing the indication (104) of the altered operating condition associated with actuation of the valve (16).

7. The method according to any preceding claim, wherein the valve (16) is movable from the first position to the second position in response to a command, further comprising:
obtaining a command to feedback time period (44) being a time taken from issuance or receipt of the command to the valve reaching the second position associated with the same actuation of the valve (16) as the first time period (42);
performing a comparison of the first time period (42) to a parameter;
performing a further comparison of the command to feedback time period (44) to a further parameter; and
providing the indication of the altered operating condition associated with actuation of the valve based on the comparison and the further comparison.

8. The method according to Claim 7, wherein the parameter comprises a nominal time taken for the valve (16) to move from the first position to the second position, and the further parameter comprises a nominal time taken from issuance or receipt of the command to the valve (16) reaching the second position.

9. The method according to Claim 7 or Claim 8, wherein the method comprises;
where the first time period (42) exceeds the parameter and the command to feedback time period (44) exceeds the further parameter, providing an indication of a first altered operating condition associated with actuation of the valve (16);
where the first time period (42) exceeds the parameter and the command to feedback time period (44) does not exceed the further parameter, providing an indication of a second altered operating condition associated with actuation of the valve (16) different to the first altered operating condition associated with actuation of the valve (16); and
where the first time period (42) does not exceed the parameter and the command to feedback time period (44) exceeds the further parameter, providing an indication of a third altered operating condition associated with actuation of the valve (16) different to the first and second altered operating conditions of the valve (16).

10. The method according to Claim 7, wherein the parameter comprises the command to feedback time period (44).

11. The method as claimed in any preceding claim, wherein the aircraft system (10) comprises an aircraft fuel supply system.

12. An aircraft fuel system (10) comprising a fuel storage tank (12), a conduit (14) in fluid communication with the fuel storage tank (12), a valve (16) to selectively enable transfer of fuel into and/or out of the fuel storage tank (12), the valve (16) located within the conduit (14), a controller (18), and an indicator (20), the controller (18) configured to monitor a plurality of time periods (42) indicative of how long it takes the valve (16) to actuate between an open position and a closed position, or vice versa, each of the plurality of time periods (42) taken during a different flight of an aircraft (300) comprising in use the aircraft fuel system (10), and compare each of the plurality of time periods (42) to a corresponding parameter, and the indicator (20) configured to provide an indication that the valve (16) is operating in an altered operating condition relative to a normal operating condition of the valve (16) based on the comparisons.

13. An aircraft fuel system (10) according to claim 12, wherein the indicator (20) is remote from the aircraft.

14. An aircraft (300) comprising the aircraft fuel system (10) of Claim 12 or 13.

## Patentansprüche

1. Verfahren zum Bestimmen eines Betriebszustands eines Ventils (16) eines Luftfahrzeugsystems (10), wobei das Ventil (16) zwischen einer ersten und einer zweiten Stellung betätigbar ist, wobei das Verfahren Folgendes umfasst:
Erhalten (102) eines ersten Zeitraums (42), der anzeigt, wie lange es dauert, das Ventil während eines ersten Fluges, bei dem das Luftfahrzeugsystem (10) eingesetzt wird, von der ersten Stellung in die zweite Stellung oder umgekehrt zu betätigen, und eines zweiten Zeitraums (42), der anzeigt, wie lange es dauert, das Ventil während eines zweiten Fluges, bei dem das Luftfahrzeugsystem (10) eingesetzt wird, von der ersten Stellung in die zweite Stellung oder umgekehrt zu betätigen, wobei sich der zweite Flug von dem ersten Flug unterscheidet; und
Bereitstellen einer Anzeige (104) eines veränderten Betriebszustands in Zusammenhang mit einer Betätigung des Ventils (16) basierend auf dem ersten und dem zweiten Zeitraum (42).

2. Verfahren nach einem der vorhergehenden Ansprüche, wobei das Verfahren Vergleichen jeweils des ersten und des zweiten Zeitraums (42) mit einem Schwellenwert (X) und, wenn der erste und der zweite Zeitraum jeweils den Schwellenwert (X) überschreiten, Bereitstellen der Anzeige (104) des veränderten Betriebszustands in Zusammenhang mit einer Betätigung des Ventils (16) umfasst.

3. Verfahren nach einem der vorhergehenden Ansprüche, wobei das Verfahren Bereitstellen der Anzeige (104) des veränderten Betriebszustands in Zusammenhang mit einer Betätigung des Ventils (16), wenn der erste und der zweite Flug innerhalb eines vorbestimmten Zeitfensters (Y) erfolgen, umfasst.

4. Verfahren nach einem der vorhergehenden Ansprüche, wobei das Ventil (16) bei dem ersten Flug eine Mehrzahl von Malen betätigt wird, wobei das Verfahren Erhalten einer ersten Mehrzahl von Zeiträumen (42), die jeweils einer jeweiligen Betätigung des Ventils (16) während des ersten Fluges entsprechen, und Auswählen des ersten Zeitraums (42) aus der ersten Mehrzahl von Zeiträumen (42) basierend auf einer Länge jedes der ersten Mehrzahl von Zeiträumen (42) umfasst, wobei das Ventil (16) bei dem zweiten Flug eine Mehrzahl von Malen betätigt wird, wobei das Verfahren Erhalten einer zweiten Mehrzahl von Zeiträumen (42), die jeweils einer jeweiligen Betätigung des Ventils (16) während des zweiten Fluges entsprechen, und Auswählen des zweiten Zeitraums (42) aus der zweiten Mehrzahl von Zeiträumen (42) basierend auf einer Länge jedes der zweiten Mehrzahl von Zeiträumen (42) umfasst.

5. Verfahren nach Anspruch 4, wobei der Schritt zum Auswählen des ersten Zeitraums (42) aus der ersten Mehrzahl von Zeiträumen (42) Auswählen des ersten Zeitraums (42) mit einem größten Wert für den ersten Flug umfasst; und
wobei der Schritt zum Auswählen des zweiten Zeitraums (42) aus der zweiten Mehrzahl von Zeiträumen (42) Auswählen des zweiten Zeitraums (42) mit einem größten Wert für den zweiten Flug umfasst.

6. Verfahren nach einem der vorhergehenden Ansprüche, wobei das Verfahren Erhalten von mindestens vier unterschiedlichen Zeiträumen (42), die anzeigen, wie lange es dauert, das Ventil (16) von der ersten Stellung in die zweite Stellung oder umgekehrt zu betätigen, wobei jeder Zeitraum (42) während eines unterschiedlichen jeweiligen Fluges einer Mehrzahl von Flügen in Zusammenhang mit einer Betätigung des Ventils (16) steht, Vergleichen jedes Zeitraums (42) mit einem entsprechenden Schwellenwert und, wenn jeder Zeitraum (42) den Schwellenwert (X) überschreitet und die Mehrzahl von Flügen innerhalb eines vorbestimmten Zeitfensters (Y) erfolgt, Bereitstellen der Anzeige (104) des veränderten Betriebszustands in Zusammenhang mit einer Betätigung des Ventils (16) umfasst.

7. Verfahren nach einem der vorhergehenden Ansprüche, wobei das Ventil (16) in Reaktion auf einen Befehl von der ersten Stellung in die zweite Stellung bewegbar ist, ferner umfassend:
Erhalten eines Befehls zur Rückmeldung eines Zeitraums (44), der eine Zeit ist, die von einer Ausgabe oder einem Empfang des Befehls bis zum Erreichen der zweiten Stellung durch das Ventil benötigt wird, der mit derselben Betätigung des Ventils (16) wie der erste Zeitraum (42) in Zusammenhang steht;
Durchführen eines Vergleichs des ersten Zeitraums (42) mit einem Parameter;
Durchführen eines weiteren Vergleichs des Befehls zur Rückmeldung eines Zeitraums (44) mit einem weiteren Parameter; und
Bereitstellen der Anzeige des veränderten Betriebszustands in Zusammenhang mit einer Betätigung des Ventils basierend auf dem Vergleich und dem weiteren Vergleich.

8. Verfahren nach Anspruch 7, wobei der Parameter eine nominale Zeit umfasst, die das Ventil (16) benötigt, um sich von der ersten Stellung in die zweite Stellung zu bewegen, und wobei der weitere Parameter eine nominale Zeit umfasst, die von der Ausgabe oder dem Empfang des Befehls bis zum Erreichen der zweiten Stellung durch das Ventil (16) benötigt wird.

9. Verfahren nach Anspruch 7 oder Anspruch 8, wobei das Verfahren Folgendes umfasst;
wenn der erste Zeitraum (42) den Parameter überschreitet und der Befehl zur Rückmeldung eines Zeitraums (44) den weiteren Parameter überschreitet, Bereitstellen einer Anzeige eines ersten veränderten Betriebszustands in Zusammenhang mit einer Betätigung des Ventils (16);
wenn der erste Zeitraum (42) den Parameter überschreitet und der Befehl zur Rückmeldung eines Zeitraums (44) den weiteren Parameter nicht überschreitet, Bereitstellen einer Anzeige eines zweiten veränderten Betriebszustands in Zusammenhang mit einer Betätigung des Ventils (16), der sich von dem ersten veränderten Betriebszustand in Zusammenhang mit einer Betätigung des Ventils (16) unterscheidet; und
wenn der erste Zeitraum (42) den Parameter nicht überschreitet und der Befehl zur Rückmeldung eines Zeitraums (44) den weiteren Parameter überschreitet, Bereitstellen einer Anzeige eines dritten veränderten Betriebszustands in Zusammenhang mit einer Betätigung des Ventils (16), der sich von dem ersten und dem zweiten veränderten Betriebszustand des Ventils (16) unterscheidet.

10. Verfahren nach Anspruch 7, wobei der Parameter den Befehl zur Rückmeldung eines Zeitraums (44) umfasst.

11. Verfahren nach einem der vorhergehenden Ansprüche, wobei das Luftfahrzeugsystem (10) ein Luftfahrzeugtreibstoffversorgungssystem umfasst.

12. Luftfahrzeugtreibstoffsystem (10), umfassend einen Treibstoffspeichertank (12), eine Leitung (14) in Fluidverbindung mit dem Treibstoffspeichertank (12), ein Ventil (16) zum selektiven Ermöglichen einer Übertragung von Treibstoff in und/oder aus dem Treibstoffspeichertank (12), wobei sich das Ventil (16) in der Leitung (14) befindet, eine Steuerung (18) und eine Anzeige (20), wobei die Steuerung (18) dazu ausgelegt ist, eine Mehrzahl von Zeiträumen (42) zu überwachen, die anzeigen, wie lange das Ventil (16) benötigt, um zwischen einer geöffneten Stellung und einer geschlossenen Stellung oder umgekehrt betätigt zu werden, wobei jeder der Mehrzahl von Zeiträumen (42) während eines unterschiedlichen Fluges eines Luftfahrzeugs (300) benötigt wird, das im Gebrauch das Luftfahrzeugtreibstoffsystem (10) umfasst, und jeden der Mehrzahl von Zeiträumen (42) mit einem entsprechenden Parameter zu vergleichen, und wobei die Anzeige (20) dazu ausgelegt ist, eine Anzeige, dass das Ventil (16) in einem relativ zu einem normalen Betriebszustand des Ventils (16) veränderten Betriebszustand arbeitet, basierend auf den Vergleichen bereitzustellen.

13. Luftfahrzeugtreibstoffsystem (10) nach Anspruch 12, wobei die Anzeige (20) vom Luftfahrzeug entfernt ist.

14. Luftfahrzeug (300), das das Luftfahrzeugtreibstoffsystem (10) nach Anspruch 12 oder 13 umfasst.

## Revendications

1. Procédé de détermination d'une condition de fonctionnement d'une soupape (16) d'un système d'aéronef (10), dans lequel la soupape (16) est actionnable entre des première et seconde positions, le procédé comprenant :
l'obtention (102) d'un premier laps de temps (42) indicatif du temps nécessaire pour que la soupape s'actionne depuis une première position jusqu'à une seconde position ou vice versa, durant un premier vol pendant lequel le système d'aéronef (10) est utilisé, et un second laps de temps (42) indicatif du temps nécessaire pour que la soupape s'actionne depuis une première position jusqu'à une seconde position ou vice versa, durant un second vol pendant lequel le système d'aéronef (10) est utilisé, le second vol étant différent du premier vol ; et
la fourniture d'une indication (104) d'une condition de fonctionnement modifiée associée à l'actionnement de la soupape (16) sur la base des premier et second laps de temps (42).

2. Procédé selon une quelconque revendication précédente, dans lequel le procédé comprend la comparaison de chacun des premier et second laps de temps (42) à une valeur seuil (X), et, lorsque chacun des premier et second laps de temps dépasse la valeur seuil (X), la fourniture de l'indication (104) de la condition de fonctionnement modifiée associée à l'actionnement de la soupape (16).

3. Procédé selon une quelconque revendication précédente, dans lequel le procédé comprend la fourniture de l'indication (104) de la condition de fonctionnement modifiée associée à l'actionnement de la soupape (16) lorsque les premier et second vols ont lieu dans les limites d'une fenêtre de temps prédéterminée (Y).

4. Procédé selon une quelconque revendication précédente, dans lequel la soupape (16) est actionnée une pluralité de fois pendant le premier vol, le procédé comprend l'obtention d'une première pluralité de laps de temps (42) chacun correspondant à un actionnement respectif de la soupape (16) durant le premier vol, et la sélection du premier laps de temps (42) à partir de la première pluralité de laps de temps (42) sur la base d'une longueur de chacun de la première pluralité de laps de temps (42), dans lequel la soupape (16) est actionnée une pluralité de fois pendant le second vol, le procédé comprend l'obtention d'une seconde pluralité de laps de temps (42) chacun correspondant à un actionnement respectif de la soupape (16) durant le second vol, et la sélection du second laps de temps (42) à partir de la seconde pluralité de laps de temps (42) sur la base d'une longueur de chacun de la seconde pluralité de laps de temps (42).

5. Procédé selon la revendication 4, dans lequel l'étape de la sélection du premier laps de temps (42) à partir de la première pluralité de laps de temps (42) comprend la sélection du premier laps de temps (42) ayant une valeur la plus grande pour le premier vol ; et l'étape de la sélection du second laps de temps (42) à partir de la seconde pluralité de laps de temps (42) comprend la sélection du second laps de temps (42) ayant une valeur le plus grande pour le second vol.

6. Procédé selon une quelconque revendication précédente, dans lequel le procédé comprend l'obtention d'au moins quatre laps de temps différents (42) indicatifs du temps nécessaire pour que la soupape (16) s'actionne depuis une première position jusqu'à une seconde position ou vice versa, chaque laps de temps (42) étant associé à l'actionnement de la soupape (16) durant un vol respectif différent d'une pluralité de vols, la comparaison de chaque laps de temps (42) à une valeur seuil correspondante, et, où chaque laps de temps (42) dépasse la valeur seuil (X) et la pluralité de vols ont lieu dans les limites de la fenêtre de temps prédéterminée (Y), la fourniture de l'indication (104) de la condition de fonctionnement modifiée associée à l'actionnement de la soupape (16).

7. Procédé selon une quelconque revendication précédente, dans lequel la soupape (16) est mobile depuis la première position jusqu'à la seconde position en réponse à une instruction, comprenant en outre :
l'obtention d'une instruction pour un laps de temps de rétroaction (44) qui est un temps nécessaire depuis l'émission ou la réception de l'instruction jusqu'à ce que la soupape atteigne la seconde position associée au même actionnement de la soupape (16) que le premier laps de temps (42) ;
la réalisation d'une comparaison du premier laps de temps (42) à un paramètre ;
la réalisation d'une comparaison supplémentaire de l'instruction pour le laps de temps de rétroaction (44) à un paramètre supplémentaire ; et
la fourniture de l'indication de la condition de fonctionnement modifiée associée à l'actionnement de la soupape sur la base de la comparaison et de la comparaison supplémentaire.

8. Procédé selon la revendication 7, dans lequel le paramètre comprend un temps nominal nécessaire pour que la soupape (16) se déplace depuis la première position jusqu'à la seconde position, et le paramètre supplémentaire comprend un temps nominal nécessaire depuis l'émission ou la réception de l'instruction jusqu'à ce que la soupape (16) atteigne la seconde position.

9. Procédé selon la revendication 7 ou la revendication 8, dans lequel le procédé comprend :
lorsque le premier laps de temps (42) dépasse le paramètre et l'instruction pour le laps de temps de rétroaction (44) dépasse le paramètre supplémentaire, la fourniture d'une indication d'une première condition de fonctionnement modifiée associée à l'actionnement de la soupape (16) ;
lorsque le premier laps de temps (42) dépasse le paramètre et l'instruction pour le laps de temps de rétroaction (44) ne dépasse pas le paramètre supplémentaire, la fourniture d'une indication d'une deuxième condition de fonctionnement modifiée associée à l'actionnement de la soupape (16) différente de la première condition de fonctionnement modifiée associée à l'actionnement de la soupape (16) ; et
lorsque le premier laps de temps (42) ne dépasse pas le paramètre et l'instruction pour le laps de temps de rétroaction (44) dépasse le paramètre supplémentaire, la fourniture d'une indication d'une troisième condition de fonctionnement modifiée associée à l'actionnement de la soupape (16) différente des première et deuxième conditions de fonctionnement modifiées de la soupape (16).

10. Procédé selon la revendication 7, dans lequel le paramètre comprend l'instruction pour le laps de temps de rétroaction (44).

11. Procédé tel que revendiqué dans une quelconque revendication précédente, dans lequel le système d'aéronef (10) comprend un système d'alimentation en carburant d'aéronef.

12. Système de carburant d'aéronef (10), comprenant un réservoir de stockage de carburant (12), un conduit (14) en communication fluidique avec le réservoir de stockage de carburant (12), une soupape (16) pour permettre sélectivement le transfert de carburant dans le réservoir de stockage de carburant (12) et/ou hors de celui-ci, la soupape (16) étant située à l'intérieur du conduit (14), une unité de commande (18), et un indicateur (20), l'unité de commande (18) étant configurée pour surveiller une pluralité de laps de temps (42) indicatifs du temps nécessaire pour que la soupape (16) s'actionne entre une position ouverte et une position fermée, ou vice versa, chacun de la pluralité de laps de temps (42) étant nécessaire durant un vol différent d'un aéronef (300) comprenant en utilisation le système de carburant d'aéronef (10), et comparer chacun de la pluralité de laps de temps (42) à un paramètre correspondant, et l'indicateur (20) étant configuré pour fournir une indication que la soupape (16) est en fonctionnement dans une condition de fonctionnement modifiée relativement à une condition de fonctionnement normale de la soupape (16) sur la base des comparaisons.

13. Système de carburant d'aéronef (10) selon la revendication 12, dans lequel l'indicateur (20) est éloigné de l'aéronef.

14. Aéronef (300), comprenant le système de carburant d'aéronef (10) de la revendication 12 ou 13.
